# EUROPÄISCHE PATENTSCHRIFT

(11) **EP 3 580 077 B1**
(45) Veröffentlichungstag und Bekanntmachung des Hinweises auf die Patenterteilung: **06.08.2025**
(21) Anmeldenummer: 18706377.1
(22) Anmeldetag: 08.02.2018
(51) Int. Cl.: B60J 10/75, B60J 10/16, B60R 13/04

(54) **DICHTUNGSELEMENT MIT VERBLENDLEISTE**
SEALING ELEMENT COMPRISING A COVER STRIP
ÉLÉMENT D'ÉTANCHÉITÉ COMPRENANT UNE BAGUETTE DE RECOUVREMENT

(30) Priorität: 13.02.2017 DE 102017102755
(43) Veröffentlichungstag der Anmeldung: 18.12.2019
(73) Patentinhaber: CQLT SaarGummi Technologies S.à.r.l., 5544 Remich (LU)
(72) Erfinder: ROUX, Sébastien, 76520 St-Aubin-Celloville (FR); SANS, Philippe, 28600 Luisant (FR)
(74) Vertreter: Patentanwälte Bernhardt / Wolff Partnerschaft mbB
(86) Internationale Anmeldenummer: PCT/EP2018/000051
(87) Internationale Veröffentlichungsnummer: WO 2018/145810

(56) Entgegenhaltungen:
- EP-A1- 2 318 226
- JP-A- 2011 025 575
- JP-A- 2013 116 672
- US-A- 6 103 168

## Beschreibung

Die Erfindung betrifft ein eine Verblendleiste umfassendes Dichtungselement, insbesondere zur Abdichtung einer in einen Schacht versenkbaren Fahrzeugfensterscheibe am Schachteingang.

Die Erfindung betrifft ferner ein Verfahren zur Herstellung eines solchen Dichtungselements.

Verblendleisten umfassende Dichtungselemente weisen herkömmlich einen durch Extrusion aus Elastomermaterial hergestellten Dichtungsstrangs auf, der mit der Verblendleiste durch Formschluss verbunden wird. Eine solche Verbindung erfordert hohen Arbeitsaufwand und ihre Automatisierung ist kompliziert. Zudem wird sie durch Maßschwankungen der zu verbindenden Teile erschwert. Ferner kann die Haltekraft der Formschlussverbindung abhängig von Fertigungstoleranzen variieren. Nachteilig bewegt sich der extrudierte Strang in Stranglängsrichtung relativ zur Verblendleiste.

Aus EP 2 318 226 A0 ist ein Dichtungselement aus einem thermoplastischen Elastomer bekannt, welches zusammen mit einer Verblendleiste aus einem thermoplastischen Kunststoff koextrudiert wird. Aus JP 2013 116672 A und JP 2011 025575 A ist bekannt, einen thermoplastischen Kunststoff mit einer Verblendleiste aus Metall durch Extrusion stoffschlüssig zu verbinden. Aus US 6,103,168 A ist eine durch Mehrkomponenten-Spritzguss hergestellte Abdeckleiste für die B-Säule eines Kraftfahrzeugs bekannt, welche einen Basisabschnitt aus einem thermoplastischen Material, einen Dichtungsabschnitt aus einem Elastomer bzw. thermoplastischen Material und eine dekorative Abdeckung aus einem thermoplastischen Material umfasst.

Der Erfindung liegt die Aufgabe zugrunde, ein neues Dichtungselement der eingangs genannten Art zu schaffen, das sich in höherer Qualität mit geringerem Aufwand herstellen lässt.

Das diese Aufgabe lösende Dichtungselement nach der Erfindung ist dadurch gekennzeichnet, dass die Verblendleiste aus einem Metall oder einem galvanisierten Plastikteil besteht.

Ein durch Spritzgießen herzustellender Abschnitt des Dichtungselements ist mit der Verblendleiste durch Angießen an die Verblendleiste verbunden. Der durch Spritzgießen herzustellende Abschnitt ist als Verbundteil aus einem Thermoplast und einem Elastomer, insbesondere einem thermoplastischen Elastomer, ausgebildet, wobei die Angussverbindung mit der Verblendleiste über einen Elastomerteil des Abschnitts hergestellt ist. Besonders bevorzugt sind ein hartes Thermoplastmaterial, wie z.B. PP, und ein weiches Elastomermaterial vorgesehen.

Ein Thermoplastteil des durch Spritzgießen herzustellenden Abschnitts bildet zweckmäßig einen Befestigungsabschnitt des Dichtungselements.

Vorteilhaft lässt sich das erfindungsgemäße Dichtungselement in leicht automatisierbaren Spritzgießarbeitsgängen komplett mit der Verblendleiste herstellen.

Zweckmäßig ist die Verblendleiste gefäßartig mit einem durch Gussmaterial des durch Spritzgießen herzustellenden Abschnitts ausfüllbaren Gefäßraum ausgebildet. Vorteilhaft fügt sich das angegossene Material in den Gefäßraum formschlüssig ein, insbesondere dann, wenn der Gefäßraum gemäß einer vorteilhaften Ausführungsform der Erfindung hinterschnitten ist.

Vorzugsweise weist die Verblendleiste an ihren Enden den Gefäßraum begrenzende Stirnwände auf. So ist das angegossene Material sowohl in Längs- auch als Querrichtung der Verblendleiste innerhalb des Gefäßraums formschlüssig festgelegt.

Die Verblendleiste besteht vorzugsweise aus aus Aluminium oder Chrom.

Ein besonders bevorzugter Verfahrensschritt besteht darin, dass die Verblendleiste im erwärmten Zustand in einem Formraum eines Formwerkzeugs angeordnet wird, derart, dass die Schrumpfung bis zur Abkühlung auf etwa Umgebungstemperatur der Schrumpfung des spritzgegossenen Abschnitts des Dichtungselements angeglichen ist. Vorteilhaft kommt es auf diese Weise weder zu Spannungen noch Rissen des an die Verblendleiste angegossenen Materials.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: ein erfindungsgemäßes Dichtungselement zur Abdichtung einer versenkbaren Fahrzeugfensterscheibe an einem Fensterschacht,
- Fig. 2: ein Dichtungselement nach der Erfindung 1 in einer Querschnittsansicht, und
- Fig. 3: eine Detailansicht einer in einem erfindungsgemäßen Dichtungsstrang verwendbaren Verblendleiste.

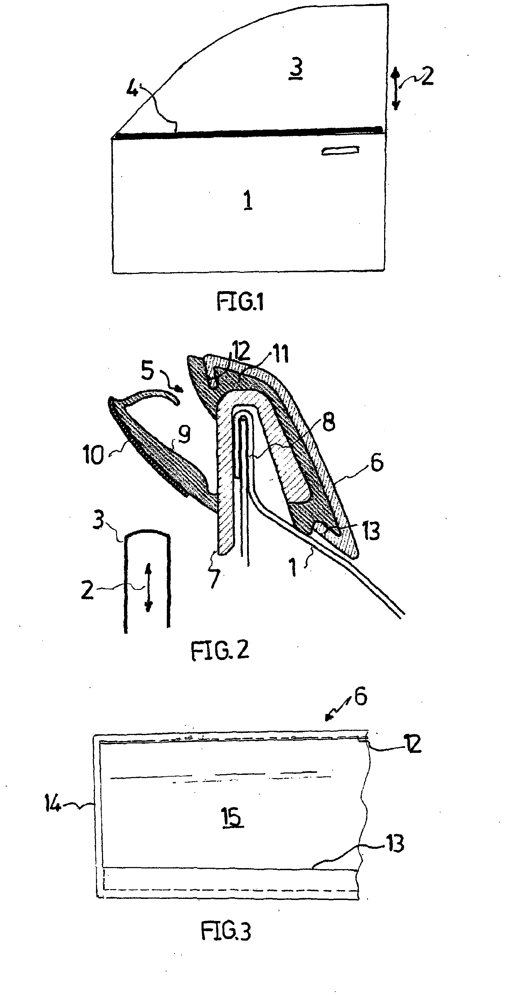

An einer Fahrzeugtür 1 mit einer gemäß Pfeil 2 in einen Schacht hinein versenkbaren Fensterscheibe 3 ist an der Schachtöffnung ein in Fig. 2 im Querschnitt dargestelltes Dichtungselement 4 angeordnet.

Das strangförmige Dichtungselement 4 umfasst einen spritzgegossenen Abschnitt 5, der an eine metallische Verblendleiste 6 angegossen ist. Die Verblendleiste 6 besteht in dem gezeigten Beispiel aus Aluminium.

Der spritzgegossene Abschnitt 5 ist als Verbundteil aus einem Thermoplast, in dem gezeigten Beispiel Polypropylen (PP), und einem Elastomer hergestellt, im vorliegenden Fall einem thermoplastischen Elastomer (TPE).

Ein aus Thermoplast bestehender Teil 7 des Abschnitts 5 bildet einen Befestigungsabschnitt zum Aufstecken auf einen an der Fahrzeugtür 1 gebildeten Karosserieflansch 8. Ein von dem Thermoplastteil 7 abstehender Elastomerteil 9 bildet eine Dichtzunge, die über eine Gleitschicht 10 an der Fensterscheibe 3 anliegt. Ein weiterer Elastomerteil 11 des Abschnitts 5 ist an die Verblendleiste 6 angegossen, wobei an den weiteren Elastomerteil 11 wiederum der Thermoplastteil 7 des Abschnitts 5 angegossen ist.

Die Verblendleiste 6 weist an ihren Längsrändern jeweils eine Abwicklung 12 bzw. 13 auf. An den beiden Enden der Verblendleiste 6 sind Stirnwände gebildet, von denen in Fig. 3 die Stirnwand 14 sichtbar ist. Die Abwinklungen 12 und 13 sowie die Stirnwände 14 bilden einen hinterschnittenen, durch das angegossene Elastomermaterial des Elastomerteils 11 ausgefüllten Gefäßraum 15.

Zur Herstellung des Dichtungsstrangs 3 wird die Verblendleiste 6 in einem Formraum eins Spritzwerkzeugs angeordnet und in einem ersten Spritzarbeitsgang der Elastomerteil 11 des durch Spritzgießen herzustellenden Abschnitts 5 erzeugt.

Die Verblendleiste 6 wird vor dem Einbringen in den Formraum auf eine Temperatur zwischen 100 und 250 °C gebracht, so dass sie in dem Formraum in einem thermisch ausgedehnten Zustand zur Anordnung kommt. Mit der Abkühlung der Verblendleiste 6 und des daran angegossenen Elastomerteils 11 auf etwa Raumtemperatur schrumpft die Verblendleiste 6 daher im gleichen Maße wie der Elastomerteil 11. Spannungen und Materialrisse durch unterschiedliche Schrumpfung werden vermieden. Die Verblendleiste 6 und der Elastomerteil 11 bilden ein stabiles Verbundteil. Eine feste Verbindung zwischen dem Elastomerteil 11 und der Verblendleiste 6 ergibt sich einerseits durch den Anguss des Elastomermaterials an das Aluminium der Verbundleiste. Zum anderen sorgt der formschlüssige Eingriff des Elastomerteils 11 in den hinterschnittenen Gefäßraum 15 der Verblendleiste 6 für stabilen Verbund.

Das aus dem Elastomerteil 11 und der Verblendleiste 6 gebildete Verbundteil wird nun in einem Formraum angeordnet und in einem weiteren Spritzarbeitsgang der Thermoplastteil 7 des durch Spritzgießen herzustellenden Abschnitts 5 erzeugt. Abschließend wird der die Dichtzunge bildende Elastomerteil 9 in einem dritten Spritzarbeitsgang hergestellt.

Es versteht sich, dass eine Verblendleiste umfassende Dichtungselemente auch an anderen Stellen einer Fahrzeugkarosserie als dem hier gezeigten Fensterschacht zum Einsatz kommen könnten, z.B auch an einer feststehenden Fahrzeugfensterscheibe.

## Patentansprüche

1. Eine Verblendleiste (6) umfassendes Dichtungselement (4), insbesondere zur Abdichtung einer in einen Schacht versenkbaren Fahrzeugfensterscheibe (3), wobei ein durch Spritzgießen hergestellter Abschnitt (5) des Dichtungselements (4) mit der Verblendleiste (6) durch Angießen an die Verblendleiste (6) verbunden ist, der durch Spritzgießen hergestellte Abschnitt (5) als Verbundteil aus einem Thermoplast und einem Elastomer hergestellt ist und die Angussverbindung über das Elastomermaterial des Abschnitts (5) hergestellt ist,
**dadurch gekennzeichnet,**
**dass** die Verblendleiste (6) aus einem Metall oder einem galvanisierten Plastikteil besteht.

2. Dichtungselement (4) nach Anspruch 1,
**dadurch gekennzeichnet,**
**dass** die Verblendleiste (6) gefäßartig mit einem durch Gussmaterial des Abschnitts (5) ausgefüllten Gefäßraum (15) ausgebildet ist.

3. Dichtungselement (4) nach Anspruch 2,
**dadurch gekennzeichnet,**
**dass** der Gefäßraum (15) hinterschnitten ist.

4. Dichtungselement (4) nach Anspruch 2 oder 3,
**dadurch gekennzeichnet,**
**dass** die Verblendleiste (6) an ihren Enden den Gefäßraum (15) begrenzende Stirnwände (14) aufweist.

5. Dichtungselement (4) nach Anspruch 1,
**dadurch gekennzeichnet,**
**dass** ein Befestigungsabschnitt des Dichtungselements (4) aus dem Thermoplast des Abschnitts (5) besteht.

6. Dichtungselement (4) nach einem der Ansprüche 1 bis 5,
**dadurch gekennzeichnet,**
**dass** die Verblendleiste (6) aus Aluminium oder Chrom besteht.

7. Verfahren zur Herstellung eines eine Verblendleiste (6) umfassenden Dichtungselements (4),
wobei die Verblendleiste (6) in einem Formraum angeordnet und im Zuge der Herstellung eines durch Spritzgießen herzustellenden Abschnitts (5) des Dichtungselements (4) mit dem Abschnitt (5) durch Angießen verbunden wird, der durch Spritzgießen hergestellte Abschnitt (5) als Verbundteil aus einem Thermoplast und einem Elastomer hergestellt ist und die Angussverbindung über das Elastomermaterial des Abschnitts (5) hergestellt ist,
**dadurch gekennzeichnet,**
**dass** die Verblendleiste (6) aus einem Metall oder einem galvanisierten Plastikteil besteht.

8. Verfahren nach Anspruch 7,
**dadurch gekennzeichnet,**
**dass** die Verblendleiste (6) im erwärmten Zustand in dem Formraum angeordnet wird, derart, dass die Schrumpfung der Verblendleiste (6) bis zur Abkühlung auf Umgebungstemperatur der Schrumpfung des spritzgegossenen Abschnitts (5) des Dichtungselements (4) angeglichen ist.

9. Verfahren nach Anspruch 8,
**dadurch gekennzeichnet,**
**dass** die Verblendleiste (6) auf 100 bis 250 °C vorgewärmt wird.

## Claims

1. Sealing element (4), in particular for sealing a vehicle window pane (3) which can be lowered into a shaft, comprising a cover strip (6), wherein a section (5) of the sealing element (4), which section (5) is manufactured by way of injection moulding, is connected to the cover strip (6) by way of being moulded onto the cover strip (6), the section (5) which is manufactured by way of injection moulding is manufactured as a composite part from a thermoplastic and an elastomer, and the moulded-on connection is established via the elastomer material of the section (5),
**characterized**
**in that** the cover strip (6) consists of a metal or a galvanized plastic part.

2. Sealing element (4) according to Claim 1,
**characterized**
**in that** the cover strip (6) is of vessel-shaped configuration with a vessel space (15) which is filled by way of moulding material of the section (5).

3. Sealing element (4) according to Claim 2,
**characterized**
**in that** the vessel space (15) is undercut.

4. Sealing element (4) according to Claim 2 or 3,
**characterized**
**in that**, at its ends, the cover strip (6) has end walls (14) which delimit the vessel space (15).

5. Sealing element (4) according to Claim 1,
**characterized**
**in that** a fastening section of the sealing element (4) consists of the thermoplastic of the section (5).

6. Sealing element (4) according to one of Claims 1 to 5,
**characterized**
**in that** the cover strip (6) consists of aluminium or chromium.

7. Method for manufacturing a sealing element (4) which comprises a cover strip (6),
wherein the cover strip (6) is arranged in a mould chamber, and is connected to a section (5) of the sealing element (4) by way of being moulded on during the manufacturing of the section (5), which section (5) is to be manufactured by way of injection moulding, the section (5) which is manufactured by way of injection moulding is manufactured as a composite part from a thermoplastic and an elastomer, and the moulded-on connection is established via the elastomer material of the section (5),
**characterized**
**in that** the cover strip (6) consists of a metal or a galvanized plastic part.

8. Method according to Claim 7,
**characterized**
**in that** the cover strip (6) is arranged in the mould chamber in the heated state in such a way that the shrinkage of the cover strip (6) up to the cooling to ambient temperature is aligned with the shrinkage of the injection-moulded section (5) of the sealing element (4).

9. Method according to Claim 8,
**characterized**
**in that** the cover strip (6) is preheated to from 100 to 250°C.

## Revendications

1. Élément d'étanchéité (4), en particulier pour l'étanchement d'une vitre (3) de véhicule automobile pouvant être abaissée dans une cavité, comprenant une baguette de revêtement (6), une section (5) fabriquée par moulage par injection de l'élément d'étanchéité (4) étant reliée à la baguette de revêtement (6) par coulée sur la baguette de revêtement (6), la section (5) fabriquée par moulage par injection étant fabriquée comme une pièce composite constituée par un thermoplastique et un élastomère et la liaison par coulée étant réalisée par l'intermédiaire du matériau élastomère de la section (5), **caractérisé en ce que** la baguette de revêtement (6) est constituée par un métal ou une pièce en plastique galvanisée.

2. Élément d'étanchéité (4) selon la revendication 1, **caractérisé en ce que** la baguette de revêtement (6) est conçue comme un vase présentant un espace (15) de vase rempli par un matériau de coulée de la section (5).

3. Élément d'étanchéité (4) selon la revendication 2, **caractérisé en ce que** l'espace (15) de vase est en contre-dépouille.

4. Élément d'étanchéité (4) selon la revendication 2 ou 3, **caractérisé en ce que** la baguette de revêtement (6) présente, au niveau de ses extrémités, des parois frontales (14) limitant l'espace (15) de vase.

5. Élément d'étanchéité (4) selon la revendication 1, **caractérisé en ce qu'**une section de fixation de l'élément d'étanchéité (4) est constituée par le thermoplastique de la section (5).

6. Élément d'étanchéité (4) selon l'une des revendications 1 à 5, **caractérisé en ce que** la baguette de revêtement (6) est en aluminium ou en chrome.

7. Procédé pour la fabrication d'un élément d'étanchéité (4) comprenant une baguette de revêtement (6),
la baguette de revêtement (6) étant agencée dans un espace de moulage et étant reliée par coulée à une section (5) de l'élément d'étanchéité (4) au cours de la fabrication de la section (5) à fabriquer par moulage par injection, la section (5) fabriquée par moulage par injection étant fabriquée comme une pièce composite constituée par un thermoplastique et un élastomère et la liaison par coulée étant réalisée par l'intermédiaire du matériau élastomère de la section (5), **caractérisé en ce que** la baguette de revêtement (6) est constituée par un métal ou une pièce en plastique galvanisée.

8. Procédé selon la revendication 7, **caractérisé en ce que** la baguette de revêtement (6) est agencée dans un état chauffé dans l'espace de moulage de telle sorte que le retrait de la baguette de revêtement (6) jusqu'au refroidissement à la température ambiante est adapté au retrait de la section (5) moulé par injection de l'élément d'étanchéité (4).

9. Procédé selon la revendication 8, **caractérisé en ce que** la baguette de revêtement (6) est préchauffée à 100 jusqu'à 250°C.
